# EUROPÄISCHE PATENTANMELDUNG

(11) **EP 4 180 364 A1**
(43) Veröffentlichungstag der Anmeldung: **17.05.2023**
(21) Anmeldenummer: 22201010.0
(22) Anmeldetag: 12.10.2022
(51) Int. Cl.: B65G 43/10, B65G 47/86, G05B 19/418, G05B 23/02, G06N 20/00

(54) **BEHÄLTERBEHANDLUNGSANLAGE**

(30) Priorität: 10.11.2021 DE 102021129265
(71) Anmelder: KRONES AG, 93073 Neutraubling (DE)
(72) Erfinder: Langwieser, Sebastian, 93073 Neutraubling (DE); Szwarc, Robert, 93073 Neutraubling (DE); Vogler, Daniel, 93073 Neutraubling (DE); Gerstenberg, Thomas, 93073 Neutraubling (DE)
(74) Vertreter: Grünecker Patent- und Rechtsanwälte PartG mbB

(57) **Zusammenfassung**

Behälterbehandlungsanlage (1), umfassend einen ersten Rundläufer (2) umfassend eine Vielzahl von Transportelementen (6) zum Transportieren von je einem Behälter entlang einer ersten Förderstrecke, einen zweiten Rundläufer (3) umfassend eine Vielzahl von Transportelementen (6) zum Transportieren von je einem Behälter entlang einer zweiten Förderstrecke, wobei die zweite Förderstrecke der ersten Förderstrecke nachgeordnet ist, eine Speichervorrichtung, und eine Steuervorrichtung, wobei die Steuervorrichtung konfiguriert ist, während des Transports eines Behälters durch die Behälterbehandlungsanlage (1) zu bestimmen, dass ein erstes Transportelement den Behälter in dem ersten Rundläufer (2) transportiert und eine dem ersten Transportelement zugeordnete Kennung in der Speichervorrichtung abzulegen, zu bestimmen, dass ein zweites Transportelement den Behälter in dem zweiten Rundläufer (3) transportiert und eine dem zweiten Transportelement zugeordnete Kennung in der Speichervorrichtung abzulegen, festzustellen, ob während des Transports des Behälters durch die Behälterbehandlungsanlage (1) ein Fehler auftritt, und wenigstens eine abgelegte Kennung aus der Speichervorrichtung abzurufen, falls festgestellt wird, dass während des Transport des Behälters ein Fehler aufgetreten ist.

## Beschreibung

### Technisches Gebiet

Die Erfindung betrifft eine Behälterbehandlungsanlage sowie ein Verfahren zum Betrieb einer Behälterbehandlungsanlage.

### Hintergrund

Es ist bekannt, dass Behälterbehandlungsanlagen typischerweise aus verschiedenen einzelnen Stationen bestehen, die ein Behälter sukzessive durchläuft. Diese Stationen sind oft als Rundläufer ausgebildet, in denen die Behälter mittels geeigneter Transportelemente befördert werden. Solche Transportelemente können beispielsweise Klammern sein, die den Behälter mittels eines Tragrings oder einer Eingriffsnut an seinem Hals greifen (sogenanntes "Neck-Handling"). Auch sind Transportelemente bekannt, mit denen die Behälter stehend transportiert werden (sogenanntes "Base-Handling"), beispielsweise in Form sogenannter "Pucks".

Während des Transports durch die Behälterbehandlungsanlage kann es aus verschiedenen Gründen zu Fehlern kommen, die dazu führen, dass der Behälter falsch oder gar nicht behandelt werden kann. Beispielsweise ist es möglich, dass die Übergabe des Behälters von einer Station zur nachfolgenden Station nicht korrekt durchgeführt wird, so dass das Transportelement der nachfolgenden Station den Behälter nicht richtig aufnimmt. Nicht korrekt aufgenommene Behälter können auch während des Transports abrutschen und deshalb für die weitere Bearbeitung fehlen.

Es ist bekannt, dass um solche Fehler während des Transports zu erkennen, an bestimmten Stellen eine Inspektion der Behälter durchgeführt wird. Dies kann beispielsweise durch eine Lichtschranke, eine Kamera oder ähnliche Mittel erfolgen. Diese Fehlererkennung beschränkt sich jedoch lediglich darauf, festzustellen, dass der Behälter fehlerhaft ist, sodass dieser ausgeschleust werden kann, so er nicht ohnehin fehlt und um nötige Maschinenreaktionen aus zu lösen, wie zum Beispiel Materialflussunterbrechung, Maschinenstopp etc.

Es ist jedoch bisher schwierig und zeitaufwändig, die Ursache des Fehlers zu erkennen. Die Fehlersuche geschieht in der Regel durch eine visuelle Inspektion durch eine erfahrene Bedienperson. Die vorliegende Erfindung stellt sich daher die Aufgabe, die Fehlerdiagnose innerhalb einer Behälterbehandlungsanlage zu verbessern.

### Zusammenfassung

Diese Aufgabe wird gelöst durch eine Behälterbehandlungsanlage gemäß Anspruch 1. Bevorzugte Ausführungsformen sind in den abhängigen Ansprüchen beschrieben.

Die Behälterbehandlungsanlage umfasst einen ersten Rundläufer umfassend eine Vielzahl von Transportelementen zum Transportieren von je einem Behälter entlang einer ersten Förderstrecke, einen zweiten Rundläufer umfassend eine Vielzahl von Transportelementen zum Transportieren von je einem Behälter entlang einer zweiten Förderstrecke, wobei die zweite Förderstrecke der ersten Förderstrecke nachgeordnet ist, eine Speichervorrichtung, und eine Steuervorrichtung, wobei die Steuervorrichtung konfiguriert ist, während des Transports eines Behälters durch die Behälterbehandlungsanlage, zu bestimmen, dass ein erstes Transportelement den Behälter in dem ersten Rundläufer transportiert und eine dem ersten Transportelement zugeordnete Kennung in der Speichervorrichtung abzulegen, zu bestimmen, dass ein zweites Transportelement den Behälter in dem zweiten Rundläufer transportiert und eine dem zweiten Transportelement zugeordnete Kennung in der Speichervorrichtung abzulegen, festzustellen, ob während des Transports des Behälters durch die Behälterbehandlungsanlage ein Fehler auftritt, und wenigstens eine abgelegte Kennung aus der Speichervorrichtung abzurufen, falls festgestellt wird, dass während des Transport des Behälters ein Fehler aufgetreten ist.

Es versteht sich, dass die erfindungsgemäße Behälterbehandlungsanlage nicht auf zwei Rundläufer beschränkt ist. Die Behälterbehandlungsanlage kann eine Vielzahl von Rundläufern umfassen, insbesondere vier oder mehr Rundläufer. Falls die Behälterbehandlungsanlage weitere Rundläufer umfasst, so können die Kennungen der Transportelemente, die den Behälter in den jeweiligen Rundläufern transportieren, ebenfalls erfasst und in der Speichereinrichtung abgelegt werden. Die nachfolgend für den ersten und/oder zweiten Rundläufer beschriebenen Merkmale können dann entsprechend auch auf die weiteren Rundläufer Anwendung finden.

Mit der erfindungsgemäßen Behälterbehandlungsanlage ist es im Falle eines Fehlers möglich, die Kennungen eines oder mehrerer der Transportelemente, die an dem Transport des Behälters durch die Behälterbehandlungsanlage beteiligt waren, sofort zu bestimmen. Dies vereinfacht die Fehlerdiagnose deutlich, da diese Transportelemente dann gezielt auf mögliche Fehlerquellen hin untersucht werden können.

Unter einem Rundläufer wird hierin im Einklang mit dem Fachwissen eine Vorrichtung verstanden, deren Transportelemente umlaufend um eine Achse verlaufen, insbesondere entlang einer Kreisbahn oder einer elliptischen Bahn. Beispielsweise kann es sich bei den Rundläufern um Transfersterne, Einlaufsterne, Auslaufsterne und/oder rotierende Behälterbehandlungsmaschinen handeln, etwa ein Blasrad, ein Rinser, ein Füllrad, ein Etikettiertisch und/oder ein Verschließer. Im Falle einer Behälterbehandlungsmaschine können die Transportelemente zugleich weitere Funktionen übernehmen, beispielsweise im Falle von Blasformen oder Füllventilen.

Die Transportelemente können dabei in gleichmäßigen Abständen entlang des Umfangs des Rundläufers angeordnet sein, der sogenannten "Teilung" oder "Teilungsabschnitte".

Unter einer "Kennung" ist ein Dateneintrag zu verstehen, welcher eine Identifikation des jeweiligen Transportelements erlaubt. Beispielsweise kann die Kennung eine numerische Kennung sein, sodass jedem Transportelement eine Zahl zugeordnet wird. Für jeden Rundläufer ist dann die Zuordnung der Zahl zum Transportelement eindeutig. Es kann auch eine über die gesamte Behälterbehandlungsanlage eindeutige Kennung verwendet werden.

Die Steuervorrichtung kann dazu konfiguriert sein, die Kennung des ersten Transportelements und des zweiten Transportelements aufgrund einer Stellung eines Antriebs des ersten Rundläufers oder des zweiten Rundläufers zu bestimmen. Insbesondere kann die Steuervorrichtung die Kennung des ersten Transportelements und des zweiten Transportelements aufgrund eines Drehwinkels eines Antriebs des ersten Rundläufers oder des zweiten Rundläufers bestimmen. Bei den Antrieben der Rundläufer kann es sich insbesondere um Servoantriebe handeln.

Dazu kann insbesondere eine Beziehung zwischen der Kennung des ersten Transportelements und des zweiten Transportelements und der jeweiligen Stellung, insbesondere des Drehwinkels, des jeweiligen Antriebs einmalig, beispielsweise in einem Lernvorgang, festgelegt werden, insbesondere wenn sich das jeweilige Transportelement in einer vorherbestimmten Stellung befindet, beispielsweise an einem Übergabepunkt. Diese Beziehung kann in der Speichereinrichtung abgelegt werden. Insbesondere kann die Stellung des Antriebs zu dem Zeitpunkt, an dem der Behälter an den ersten Rundläufer bzw. an den zweiten Rundläufer übergeben wird, bestimmt werden. Mit anderen Worten können die Übergabepunkte eingelernt werden. Damit kann festgestellt werden, welches Transportelement des ersten Rundläufers den Behälter übernimmt. Analog kann für den zweiten Rundläufer und eventuell nachgeordnete Rundläufer das jeweilige Transportelement und die jeweiligen Übergabepunkte bestimmt werden. Auf diese Art und Weise ist es einfach möglich, die Kennungen der jeweiligen Transportelemente zu ermitteln, da lediglich die Stellung des Antriebs des jeweiligen Rundläufers ermittelt werden muss.

Die Steuervorrichtung kann eine oder mehrere Steuerungen umfassen, die insbesondere über einen Datenbus miteinander verbunden sind. Beispielsweise kann eine separate Steuerung für die Antriebe der Rundläufer wie auch dem Ofen bzw. dem Heizmodul vorgesehen sein. Diese Steuerung der Antriebe kann die Position der jeweiligen Antriebe über den Datenbus an eine weitere Steuerung übermitteln, welche für die Bestimmung der Transportelemente und das Ablegen der Kennungen zuständig ist. Letztere Steuerung kann insbesondere der Hauptsteuerung der Behälterbehandlungsanlage entsprechen.

Die Speichereinrichtung kann ein Schieberegister umfassen, und die Steuervorrichtung kann konfiguriert sein, die Kennung des ersten Transportelements und des zweiten Transportelements in dem Schieberegister abzulegen.

Unter dem Begriff Schieberegister ist hier und im Folgenden eine Datenstruktur zu verstehen, die eine feste Größe, insbesondere eine festgelegte Anzahl von Speicherelementen, besitzt. Dabei können die einzelnen Speicherelemente eine beliebige Größe aufweisen. Die Speicherelemente können feste Speicheradressen, insbesondere aufsteigende Speicheradressen, aufweisen. Insbesondere ist es möglich, dass in dem Schieberegister abgelegte Daten nicht statisch in einem bestimmten Speicherelement abgelegt werden, sondern bei jedem Speichervorgang von einem Speicherelement in ein anderes Speicherelement des Schieberegisters verschoben werden. Beispielsweise können Daten zunächst in einem Speicherelement mit einer bestimmten Speicheradresse abgelegt werden. Bei dem nächsten Speichervorgang können diese Daten in ein Speicherelement verschoben werden, welches eine andere, insbesondere höhere, Speicheradresse aufweist. Insbesondere können die Daten in ein Speicherelement verschoben werden, welches die unmittelbar nachfolgende Speicheradresse zum verwendeten Speicherelement aufweist. Insbesondere ist es möglich, dass die Daten aus dem Schieberegister entfernt werden, wenn sie nicht mehr in ein Speicherelement mit einer höheren Adresse verschoben werden können. Die einzelnen Speicherelemente können dabei so beschaffen sein, dass in einem Speicherelement sowohl die Kennung des ersten Transportelements als auch die Kennung des zweiten Transportelements zusammen abgelegt werden können. Weiterhin ist es möglich, dass zusätzliche Daten, beispielsweise eine Kennung des Behälters oder ein Fehler-Flag, in dem Speicherelement abgelegt werden.

Die Speicherung der Kennung des ersten Transportelements und des zweiten Transportelements in einem solchen Schieberegisters ermöglicht eine besonders effiziente Nutzung der Speichervorrichtung. Durch die feste Größe des Schieberegisters und das regelmäßig Entfernen von Daten aus dem Schieberegister kann verhindert werden, dass eine unnötige Menge an Daten in der Speichervorrichtung abgelegt wird.

Das Schieberegister kann eine vorbestimmte Anzahl von Speicherelementen aufweisen, wobei die Anzahl von Speicherelementen einer Anzahl von Transportpositionen entspricht, die der Behälter bei dem Transport durch die Behälterbehandlungsanlage durchläuft, wobei der Behälter jeweils von einer Transportposition zur nächsten durch einen definierten Transportschritt weiterbewegt wird. Der Transportschritt kann dabei einer Bewegung des Behälters entlang der jeweiligen Transportstrecke um einen Teilungsabschnitt des jeweiligen Rundläufers oder eine anderweitig definierte Strecke entsprechen. Mit anderen Worten kann für jede dieser Transportpositionen ein Speicherelement in dem Schieberegister vorhanden sein. Dies ermöglicht eine virtuelle Abbildung der Transportstrecke in dem Speicherelement und damit eine effiziente Nutzung der Speichervorrichtung. Insbesondere kann somit sichergestellt werden, dass für jede Transportposition, die der Behälter während des Transports einnehmen kann, eine Kennung des ersten und/oder des zweiten Transportelements abgespeichert werden kann.

Die Steuervorrichtung kann konfiguriert sein, eine erste Transportposition zu bestimmen, an dem sich der Behälter zu einem ersten Zeitpunkt befindet, insbesondere aufgrund einer Stellung eines Antriebs des ersten Rundläufers oder des zweiten Rundläufers, und die Kennung des ersten Transportelements und/oder des zweiten Transportelements in dem Speicherelement abzulegen, das der ersten Transportposition entspricht. Somit kann sichergestellt werden, dass die in dem Speicherelement abgelegte Kennung des ersten und/oder des zweiten Transportelements dem korrekten Behälter an der korrekten Transportposition zugeordnet wird.

Dabei kann zur Bestimmung der Transportposition beispielsweise auf die bereits oben erwähnte Beziehung zwischen der Stellung eines Antriebs des ersten Rundläufers mit dem Übergabepunkt an den ersten Rundläufer und/oder des zweiten Rundläufers mit der Übergabeposition an den zweiten Rundläufer zurückgegriffen werden. Insbesondere, wenn die Stellung des jeweiligen Antriebs bei der Übergabe an den jeweiligen Rundläufer bekannt ist, kann die Transportposition einfach aus der aktuellen Stellung des jeweiligen Antriebs berechnet werden. Beispielsweise kann aus einer Differenz der aktuellen Stellung des jeweiligen Antriebs und der Stellung des jeweiligen Antriebs bei der Übergabe an den jeweiligen Rundläufer eine Anzahl von Transportschritten bestimmt werden, die seit der Übergabe an den jeweiligen Rundläufer erfolgt sind. Auf diese Art und Weise kann die Transportposition des Behälters entlang der gesamten Behälterbehandlungsanlage auf einfache Art und Weise ermittelt werden.

Die Steuervorrichtung kann weiterhin konfiguriert sein, zu bestimmen, dass zu einem zweiten Zeitpunkt seit dem ersten Zeitpunkt eine bestimmte Anzahl von Transportschritten erfolgt ist, insbesondere aufgrund einer Stellung eines Antriebs des ersten Rundläufers oder des zweiten Rundläufers, und die Kennung des ersten Transportelements und/oder des zweiten Transportelements in dem Speicherelement abzulegen, das der Transportposition entspricht, an der sich der Behälter aufgrund der bestimmten Anzahl von Transportschritten zu dem zweiten Zeitpunkt befindet. Somit kann der Transport des Behälters durch die Behälterbehandlungsanlage in dem Schieberegister virtuell nachgebildet werden. Dies ist besonders vorteilhaft für die Fehlerdiagnostik. Denn falls an einer bestimmten Transportposition ein Fehler festgestellt wird, beispielsweise, weil sich an dieser Transportposition ein Kontrollpunkt befindet, so kann durch Auslesen des entsprechenden Speicherelements sofort festgestellt werden, welche Transportelemente an dem Transport des Behälters bis zu diesem Punkt beteiligt waren.

Hierbei kann die Bestimmung, dass eine bestimmte Anzahl von Transportschritten erfolgt ist, analog wie oben beschrieben über einen Vergleich der Stellung des jeweiligen Antriebs zu dem zweiten Zeitpunkt mit der Stellung des Antriebs zum ersten Zeitpunkt erfolgen.

Die Steuervorrichtung kann weiterhin konfiguriert sein, die Kennung des zweiten Transportelements nicht in der Speichervorrichtung abzulegen, solange sich der Behälter auf der ersten Förderstrecke befindet, oder als Kennung des zweiten Transportelements einen Platzhalter, insbesondere eine Null, in der Speichervorrichtung abzulegen, solange sich der Behälter auf der ersten Förderstrecke befindet. Dadurch, dass die genaue Kennung des zweiten Transportelements erst in der Speichervorrichtung abgelegt wird, wenn der Behälter an das zweite Transportelement übergeben wird, kann erreicht werden, dass bei einem Fehler, der auf der ersten Förderstrecke auftritt, lediglich die Kennung des ersten Transportelements aus der Speichervorrichtung abgerufen wird. Somit kann eine unnötige Fehlersuche an dem zweiten Transportelement vermieden werden. Zudem kann vermieden werden, dass das zweite Transportelement in einer Fehlerstatistik verzeichnet wird, obwohl dort möglicherweise keine Fehlerquelle vorliegt.

Die Steuervorrichtung kann weiterhin konfiguriert sein, für jeden Rundläufer mindestens einen Zähler für eine Anzahl von Fehlern zu erhöhen, falls festgestellt wird, dass während des Transports des Behälters entlang der Förderstrecke dieses Rundläufers oder eines nachgeordneten Rundläufers ein Fehler aufgetreten ist. Auf diese Art und Weise kann die Fehlerdiagnostik verbessert werden, da schnell erkannt werden kann, an welchen Stellen der Behälterbehandlungsanlage besonders häufig Fehler auftreten.

Insbesondere kann der mindestens eine Zähler einen Zähler für die Art des Fehlers und/oder einen Zähler für den ersten Rundläufer und/oder einen Zähler für einen den ersten Rundläufer nachgeordneten Rundläufer und/oder einen Zähler für die Kennung des ersten Transportelements und/oder einen Zähler für die Kennung des zweiten Transportelements umfassen. Hiermit kann die Fehlersuche weiter verbessert werden, da beispielsweise aus der Art des Fehlers bereits Rückschlüsse auf mögliche Probleme gezogen werden können. Die Art des Fehlers kann dabei beispielsweise durch eine optische Kontrolle des Behälters an einer Kontrollstation festgestellt werden. Weiterhin kann die Fehlerdiagnostik weiter verbessert werden, da beispielsweise schnell erkannt werden kann, welche Transportelemente und/oder Rundläufer der Behälterbehandlungsanlage besonders häufig an Fehlern beteiligt sind.

Die oben genannte Aufgabe wird weiterhin durch ein Verfahren zum Betrieb einer Behälterbehandlungsanalage gemäß Anspruch 12 gelöst. Die Behälterbehandlungsanlage kann dabei eines oder mehrere der oben beschriebenen Merkmale aufweisen. Bevorzugte Ausführungsformen des Verfahrens sind in den abhängigen Ansprüchen 13 bis 18 beschrieben.

Insbesondere kann das Verfahren einen oder mehrere Verfahrensschritte aufweisen, für deren Ausführung die oben beschriebene Steuervorrichtung konfiguriert ist.

### Kurzbeschreibung der Zeichnungen

Weitere Merkmale und Vorteile der Erfindung werden nachfolgend anhand der beispielhaften Figuren erläutert. Dabei zeigt:
- Figur 1: schematisch eine Behälterbehandlungsanlage in Aufsicht;
- Figur 2: schematisch die Komponenten einer Behälterbehandlungsanlage in einem Blockschaltbild; und
- Figur 3: schematisch ein Schieberegister; und
- Figuren 4a bis 4c: schematisch die Speicherung von Daten in einem Schieberegister während des Betriebs einer Behälterbehandlungsanlage.

### Detaillierte Beschreibung

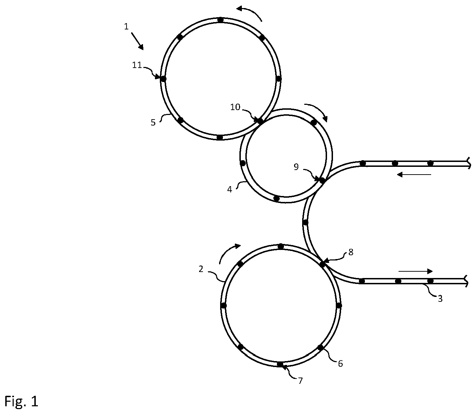

Figur 1 zeigt schematisch eine Behälterbehandlungsanlage 1 in Aufsicht. Die gezeigte Behälterbehandlungsanlage 1 umfasst vier Behandlungsstationen, die jeweils als Rundläufer 2 bis 5 ausgebildet sind. Es versteht sich, dass die Behälterbehandlungsanlage 1 auch eine andere Anzahl von Behandlungsstationen aufweisen kann. Die Laufrichtung der jeweiligen Rundläufer 2 bis 5 ist durch die eingezeichneten Pfeile gezeigt.

Jede der Behandlungsstationen 2 bis 5 umfasst eine Vielzahl von Transportelementen 6. Die Transportelemente 6 sind dazu ausgebildet, jeweils einen Behälter entlang der Förderstrecke der jeweiligen Station zu transportieren. Die Transportelemente 6 weisen jeweils eine Kennung auf, die die Identifizierung eines Transportelements 6 eindeutig ermöglicht. Diese Kennung kann auch physisch am jeweiligen Transportelement 6 angeordnet sein, beispielsweise auf einem Schild oder Aufkleber. Jeder der Rundläufer 2 bis 5 wird in dem gezeigten Ausführungsbeispiel über einen nicht gezeigten Servomotor betrieben, der den jeweiligen Rundläufer um eine Drehachse des Rundläufers bewegt. Wie weiter oben beschrieben, wird die Transportstrecke entlang der einzelnen Rundläufer in eine bestimmte Anzahl von Transportschritten unterteilt. Dabei wird durch einen Transportschritt ein Transportelement 6 jeweils von einer Transportposition der Förderstrecke des jeweiligen Rundläufers zu der nächsten Transportposition bewegt. Dabei entspricht jeder Transportschritt in diesem Beispiel einem Teilungsabschnitt.

Es ist zu erkennen, dass für den Rundläufer 2 nach einer bestimmten Anzahl von Transportschritten ein Übergabepunkt für Behälter an den Rundläufer 3 (in Figur 1 nur teilweise zu sehen) vorgesehen ist. Ebenso ist ein Übergabepunkt von dem Rundläufer 3 an den Rundläufer 4, sowie ein Übergabepunkt von dem Rundläufer 4 an den Rundläufer 5 vorgesehen. Dabei erfolgt die Übergabe eines Behälters von einem Rundläufer an den nachfolgenden Rundläufern immer nach einer für den jeweiligen Rundläufer charakteristische Anzahl von Transportschritten.

In der gezeigten Ausführungsform der Behälterbehandlungsanlage 1 wird der Behälter zunächst an dem Übergabepunkt 7 an den ersten Rundläufer 2 übergeben. Nach fünf Transportschritten erfolgt an dem Übergabepunkt 8 die Übergabe des Behälters von dem Rundläufer 2 an den Rundläufer 3. Nach weiteren einhundert Transportschritten hat der Behälter den Rundläufer 3 durchlaufen und wird an dem Übergabepunkt 9 an den Rundläufer 4 übergeben. In dem Rundläufer4 wird der Behälter weitere drei Transportschritte bewegt, und an dem Übergabepunkt 10 an den Rundläufer 5 übergeben. Nach weiteren fünf Transportschritten hat der Behälter den Rundläufer 5 durchlaufen und verlässt die Behälterbehandlungsanlage 1 an dem Übergabepunkt 11. In dem gezeigten Ausführungsbeispiel umfasst die gesamte Transportstrecke, die der Behälter in den vier Rundläufern 2 bis 5 der Behälterbehandlungsanlage 1 zurücklegt, also insgesamt 113 Transportschritte.

Die in Figur 1 gezeigte Behälterbehandlungsanlage kann insbesondere eine Blasmaschine zum Herstellen von Kunststoffbehältern aus Vorformlingen sein. Bei dem Rundläufer 2 kann es sich beispielsweise um einen Einlaufstern, insbesondere einen Sägezahnstern, für die Vorformlinge handeln. Der Rundläufer 3 kann eine Heizstrecke, insbesondere ein Ofen, sein. Der Rundläufer 4 kann der Einlaufstern für das Blasrad 5 sein. Am Übergabepunkt 11 kann der geformte Behälter an einen nicht gezeigten Auslaufstern übergeben werden und von dort weiter an eine andere nachgelagerte Maschine wie eine Beschichtungsmaschine oder einen Füller, und/oder Etikettierer und nachfolgend gegebenenfalls noch an einen Verschließer.

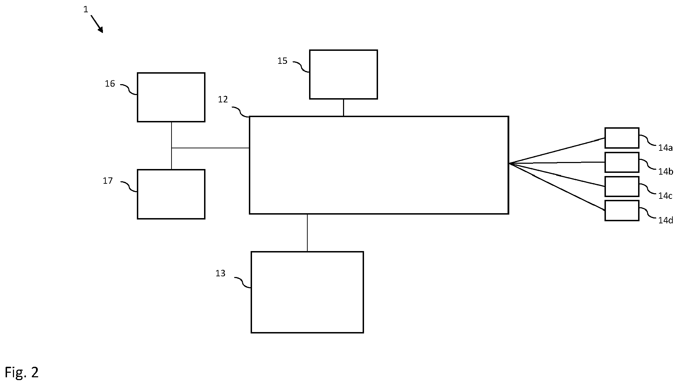

Figur 2 zeigt schematisch die Komponenten einer Behälterbehandlungsanlage 1 in einem Blockschaltbild. Dabei kann es sich insbesondere um die in Figur 1 gezeigte Behälterbehandlungsanlage 1 handeln. In Figur 2 ist zu sehen, dass die Behälterbehandlungsanlage 1 eine Steuervorrichtung 12 und eine Speichervorrichtung 13 aufweist, die miteinander kommunizieren können. Weiterhin umfasst die Behälterbehandlungsanlage 1 vier Antriebe 14a bis 14d, die jeweils zum Antrieb eines der Rundläufer 2 bis 5 ausgebildet sind. Die Steuervorrichtung 12 kann mehrere separate Steuerungen umfassen, die miteinander über einen Datenbus verbunden sind (nicht gezeigt). Insbesondere kann die Steuervorrichtung 12 eine Antriebssteuerung umfassen, die die Antriebe 14a bis 14d kontrolliert, und insbesondere die Position der jeweiligen Antriebe 14a bis 14d bestimmen kann. Die Antriebssteuerung kann die Position der jeweiligen Antriebe 14a bis 14d über den Datenbus an eine weitere Steuerung der Steuervorrichtung 12 übermitteln, welche für die Bestimmung der Transportelemente 6 und das Ablegen der Kennungen zuständig ist. Letztere Steuerung kann insbesondere der Hauptsteuerung der Behälterbehandlungsanlage 1 entsprechen.

Mit Bezug auf Figur 1 bewegt beispielsweise der Antrieb 14a den ersten Rundläufer 2, der Antrieb 14b den zweiten Rundläufer 3, der Antrieb 14c den dritten Rundläufer 4, und der Antrieb 14d den vierten Rundläufer 5.

Die Behälterbehandlungsanlage 1 umfasst weiterhin eine oder mehrere Kontrolleinheiten 15, die dazu ausgebildet sind, die einzelnen Behälter während des Transports durch die Behälterbehandlungsanlage 1 zu überprüfen. Die Kontrolleinheiten 15 können beispielsweise entlang der jeweiligen Förderstrecken der Rundläufer 2 bis 5 angeordnet sein. Die Kontrolleinheiten 15 können beispielsweise einen oder mehrere optische Sensoren aufweisen.

Die Kontrolleinheiten 15 sind insbesondere dazu konfiguriert, Kontrolldaten, beispielsweise Bilder, einer Transporteinheit und/oder eines Behälters zu erfassen, mittels derer bestimmt werden kann, ob während des Transports des Behälters ein Fehler aufgetreten ist. Ein Fehler kann sich beispielsweise darin äußern, dass der Behälter nicht korrekt geformt oder behandelt worden ist, oder dass ein Transportelement 6 keinen Behälter transportiert, dass der Behälter also während des Transports verloren gegangen ist. Diese Fälle sind lediglich beispielhaft, und es versteht sich, dass es eine Anzahl weiterer Fehler gibt, deren Auswirkungen von den Kontrolleinheiten 15 erfasst werden können.

Die Kontrolleinheiten 15 können mit der Steuervorrichtung 12 kommunizieren. Insbesondere können die Kontrolleinheiten 15 die genannten Kontrolldaten an die Steuervorrichtung 12 übermitteln. Die Steuervorrichtung 12 kann aufgrund der empfangenen Kontrolldaten bestimmen, ob während des Transports eines Behälters ein Fehler aufgetreten ist. Es ist auch möglich, dass die Steuervorrichtung 12 aufgrund der Kontrolldaten eine Art des aufgetretenen Fehlers bestimmt. Es ist auch möglich, dass die Verarbeitung der Kontrolldaten bereits in den Kontrolleinheiten 15 stattfindet, und die Kontrolleinheiten 15 das Auftreten und die Art des Fehlers an die Steuervorrichtung 12 weiterleiten.

Die Behälterbehandlungsanlage 1 umfasst weiterhin eine Anzeigevorrichtung 16 und eine Eingabevorrichtung 17. Über die Anzeigevorrichtung 16 können einem Benutzer beispielsweise Statusinformationen der Behälterbehandlungsanlage 1 angezeigt werden. Die Eingabevorrichtung 17 kann beispielsweise verwendet werden, um Einstellungen der Behälterbehandlungsanlage 1 zu konfigurieren. Es ist möglich, dass die Anzeigevorrichtung 16 und die Eingabevorrichtung 17 als eine Einheit, beispielsweise als Touchscreen, ausgebildet sind.

Weiterhin kann die Behälterbehandlungsanlage 1 zusätzlich oder alternativ eine Kommunikationsvorrichtung (nicht gezeigt) zum Empfangen und Senden von Daten aufweisen. Mittels der Kommunikationsvorrichtung können beispielsweise Statusinformationen an ein externes Gerät, beispielsweise ein Smartphone oder ein Tablet, gesendet und dort angezeigt und analysiert werden. Auch ist es möglich, über die Kommunikationsvorrichtung eine entfernte Konfiguration der Behälterbehandlungsanlage 1 vorzunehmen.

Während des Betriebs der Behälterbehandlungsanlage 1 kann die Steuervorrichtung 12 Daten der Antriebe 14a bis 14d abfragen, um die Transportposition eines Behälters und die Kennung von Transportelementen 6, die den Behälter transportieren, zu bestimmen. Um eine Identifizierung einer aktuellen Transportposition eines bestimmten Behälters während des Betriebs einfach bestimmen zu können, kann vor dem Betrieb der Behälterbehandlungsanlage 1 ein Lernvorgang durchgeführt werden, bei dem bestimmte Parameter mit der Stellung der jeweiligen Antriebe 14a bis 14d verknüpft werden. Dabei kann es sich insbesondere um die Kennung des Transportelements 6 handeln, welches sich bei der Stellung des jeweiligen Antriebs 14a bis 14d an dem Übergabepunkt befindet, an dem ein Behälter an den jeweiligen Rundläufer 2 bis 5 übergeben wird. Der Lernvorgang kann insbesondere vor der ersten Inbetriebnahme der Behälterbehandlungsanlage 1, nach einem Umbau der Behälterbehandlungsanlage 1 und/oder nach einem Austausch einer oder mehrerer Komponenten der Behälterbehandlungsanlage 1 durchgeführt werden.

Ein solcher Lernvorgang wird im Folgenden beispielhaft mit Bezug auf die Figuren 1 und 2 beschrieben. Zunächst wird ein Behälter an dem Übergabepunkt 7 an den ersten Rundläufer 2 übergeben. Es wird festgehalten, welche Kennung das Transportelement 6 hat, das den Behälter an dem Übergabepunkt 7 übernimmt. Zudem wird die aktuelle Stellung des Antriebs 14a bestimmt. Diese Stellung kann beispielsweise durch einen momentanen Drehwinkel des Antriebs 14a beschrieben werden. Somit wird eine Beziehung zwischen demjenigen Transportelement 6, welches einen Behälter beim Einlaufen in den Rundläufer 2 übernimmt, und der Stellung des Antriebs 14a festgelegt. Diese Beziehung kann in der Speichervorrichtung 13 abgelegt werden.

Dieser Prozess wird für alle nachfolgenden Rundläufer wiederholt, wobei jeweils die Stellung der Antriebe 14b, 14c und 14d mit der Kennung des jeweiligen Transportelements 6 der Rundläufer 3, 4 und 5 an den Übergabepunkten 8, 9 und 10 korreliert werden. Dabei kann ein solcher Lernprozess individuell für die einzelnen Rundläufer durchgeführt werden. Es ist aber auch möglich, den Lernprozess für die gesamte Behälterbehandlungsanlage 1 insgesamt durchzuführen. In diesem Fall kann zunächst die Beziehung zwischen der Kennung des Transportelements 6 des ersten Rundläufers 2 und der Stellung des Antriebs 14a wie oben beschrieben festgelegt werden. Anschließend wird der Behälter acht Transportschritte weiterbewegt (im sogenannten "Tipp-Betrieb", bei dem der Behälter durch eine manuelle Bedienung die Behälterbehandlungsanlage als Ganzes drehen lässt wodurch bestimmte Positionen genauer angefahren werden können und jeweils um einen Teilungsabschnitt weiterbewegt wird), so dass er an dem Übergabepunkt 8 an den Rundläufer 3 übergeben wird. An dieser Stelle wird die Kennung des Transportelements 6, das den Behälter in den Rundläufer 3 übernimmt, sowie die aktuelle Stellung des Antriebs 14b bestimmt. Damit wird die Beziehung zwischen der Kennung des Transportelements 6 des zweiten Rundläufers 3 und der Stellung des Antriebs 14b festgelegt. Dieser Vorgang wird solange wiederholt, bis der Behälter die Behälterbehandlungsanlage 1 verlässt, so dass am Ende jeweils eine Beziehung zwischen den Transportelementen 6 der Rundläufer 2 bis 5 und einer Stellung der jeweiligen Antriebe 14a bis 14d vorliegt.

Während des Betriebs der Behälterbehandlungsanlage 1 kann demnach einfach aufgrund der momentanen Stellung eines Antriebs bestimmt werden, welches Transportelement 6 einen Behälter beim Einlaufen in den jeweiligen Rundläufer übernimmt.

Auch die aktuelle Transportposition eines Behälters lässt sich einfach über die aktuelle Stellung des jeweiligen Antriebs 14a bis 14d bestimmen. Denn die Stellen der Übergabepunkte 7 bis 10 sind ebenso bekannt wie die Anzahl der Transportschritte, die zwischen den jeweiligen Übergabepunkten liegen. Weiterhin ist bekannt, wie weit sich die jeweiligen Antriebe 14a bis 14d während eines Transportschrittes drehen. Damit kann die Anzahl der Transportschritte, und damit die aktuelle Transportposition, bestimmt werden.

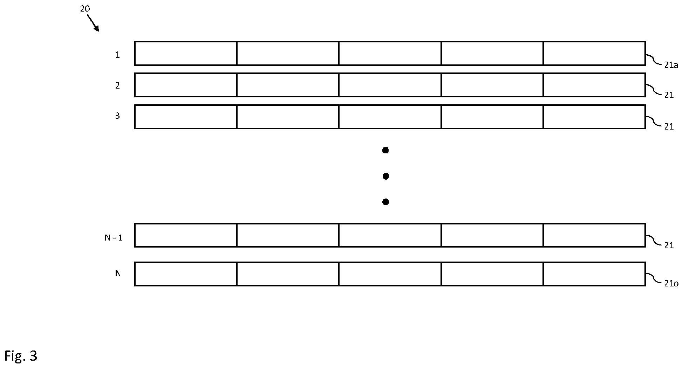

Um den Transport der Behälter durch die Behälterbehandlungsanlage 1 zu protokollieren, umfasst die Speichervorrichtung 13 ein Schieberegister 20. Ein solches Schieberegister 20 ist schematisch in Figur 3 gezeigt.

Das Schieberegister 20 umfasst eine Anzahl N von Speicherelementen 21, in denen jeweils Daten, die einem Behälter zugeordnet sind, abgelegt werden können. Diese Daten können eine Kennung des Behälters umfassen. Zusätzlich oder alternativ können diese Daten eine oder mehrere Kennungen der Transportelemente 6 umfassen, die am Transport des Behälters durch die Behälterbehandlungsanlage 1 beteiligt sind. In dem in Figur 3 gezeigten Schieberegister ist jedes Speicherelement 21 dazu ausgebildet, die Kennung eines Behälters, und jeweils die Kennung eines Transportelements 6 in den Rundläufern 2 bis 5 zu speichern. Dies ist durch die Unterteilung der Speicherelemente 21 angedeutet. Die Speicherung der Kennung des Behälters ist lediglich optional.

Die Anzahl N der Speicherelemente 21 in dem Schieberegister 20 entspricht der Anzahl von Transportpositionen der Behälterbehandlungsanlage 1. In dem in Figur 1 gezeigten Ausführungsbeispiel würde das Schieberegister 20 also N = 113 Speicherelemente umfassen. In Figur 3 sind die Speicherelemente 21 von oben nach unten in aufsteigender Reihe angezeigt. Mit anderen Worten ist das oberste Speicherelement 21a das erste Speicherelement des Schieberegisters 20, und das unterste Speicherelement 21o das letzte Speicherelement des Schieberegisters 20. Zum besseren Verständnis sind die Speicherelemente in der Zeichnung mit einer aufsteigenden Nummerierung von 1 bis N versehen.

Das oberste Speicherelement 21a entspricht damit der in Figur 1 gezeigten Position 6, an der ein Behälter an die Rundläufer 2 übergeben wird. Das unterste Speicherelement 21o entspricht der in Figur 1 gezeigten letzten Transportposition 11.

Während des Betriebs der Behälterbehandlungsanlage 1 werden die Daten, die einem bestimmten Behälter zugeordnet sind, in dem Speicherelement 21 abgelegt, das der aktuellen Transportposition des Behälters entspricht. Insbesondere wird bei der Übergabe des Behälters an den Rundläufer 2 an dem Übergabepunkt 7 die Kennung des Transportelements, das den Behälter im Rundläufer 2 transportiert, in dem Speicherelement 21a abgelegt. Während des Transports des Behälters werden die Daten entsprechend der Transportposition des Behälters in das jeweilige Speicherelement 21 verschoben und gegebenenfalls ergänzt. Wenn der Behälter die Behälterbehandlungsanlage 1 verlässt, werden die ihm zugeordneten Daten aus dem Schieberegister 20 entfernt.

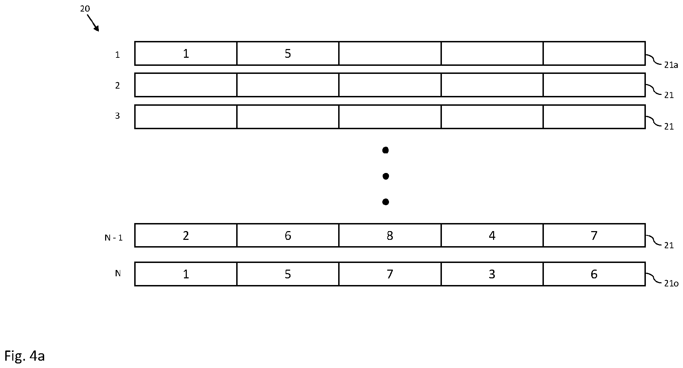

Der Speichervorgang in dem Schieberegister 20 während des Betriebs der Behälterbehandlungsanlage 1 wird anhand der Figuren 4a bis 4c erläutert.

Figur 4a zeigt die Situation, bei der gerade ein erster Behälter an den Rundläufer 2 übergeben worden ist. Es ist zu sehen, dass die Kennung des Behälters "1" und die Kennung des Transportelements des Rundläufers 2 "5" im ersten Speicherelement 21a abgelegt wurden. Die anderen Speicherelemente 21 enthalten keine Daten.

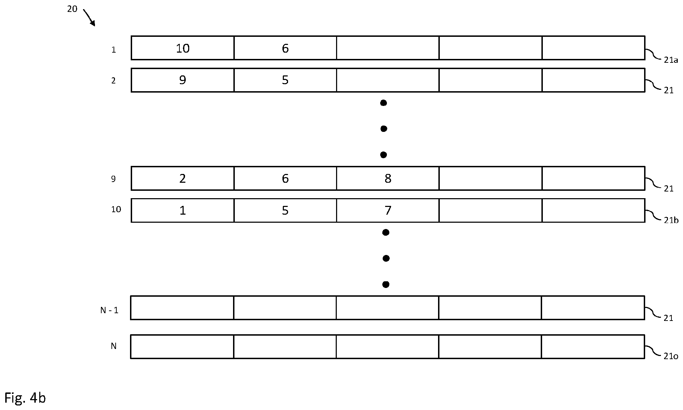

Figur 4b zeigt die Situation, nachdem 10 Transportschritte erfolgt sind. Es ist zu sehen, dass die Daten des Behälters mit der Kennung "1" in das zehnte Speicherelement 21b des Schieberegisters 20 verschoben worden sind. Da sich der Behälter nunmehr in dem zweiten Rundläufer 3 befindet, ist zusätzlich zu den Kennungen des Behälters und des Transportelements des ersten Rundläufers 2 die Kennung des Transportelements des zweiten Rundläufers "7" abgelegt. Es ist weiterhin zu sehen, dass in den ersten bis neunten Speicherelementen 21 Daten abgelegt sind, die den auf den Behälter "1" folgenden Behältern zugeordnet sind.

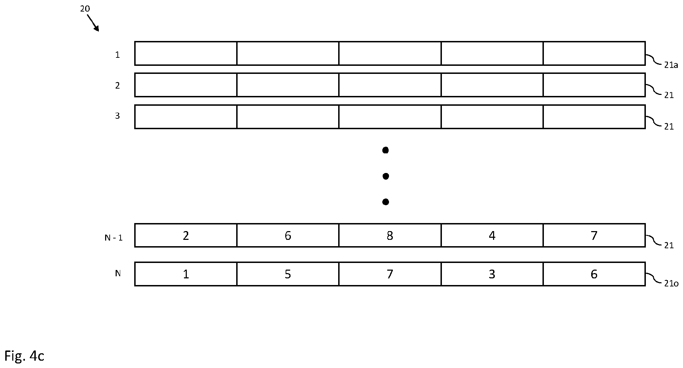

Figur 4c zeigt die Situation, bei der der Behälter mit der Kennung "1" die letzte Transportposition erreicht hat. Es ist zu sehen, dass die dem Behälter "1" zugeordneten Daten in dem letzten Speicherelement 21o abgelegt sind, und nun die Kennungen aller Transportelemente umfassen, die an dem Transport des Behälters mit der Kennung "1" durch die Behälterbehandlungsanlage 1 beteiligt waren, in dem Speicherelement 21o abgelegt worden sind.

Während des Betriebs der Behälterbehandlungsanlage 1 kann, wie oben erwähnt, beispielsweise durch die Steuervorrichtung 12 bestimmt werden, dass ein Fehler während des Transports eines Behälters aufgetreten ist. Falls bestimmt worden ist, dass ein Fehler aufgetreten ist, liest die Steuervorrichtung 12 die Daten aus, die in dem Speicherelement 21 des Schieberegisters 20 abgelegt sind, die der aktuellen Transportposition des Behälters bzw. des Transportelements entspricht, an dem der Fehler festgestellt worden ist.

Wurde beispielsweise mittels einer Kontrolleinheit 15 an der Transportposition "9" ein Fehler an dem Behälter mit der Kennung "1" festgestellt, und ist seit der Aufnahme und Übermittlung der Kontrolldaten ein weiterer Transportschritt erfolgt, so liest die Steuervorrichtung 12 die Daten aus dem zehnten Speicherelement aus. In dem Beispiel, das in Figur 4b illustriert ist, liest die Steuervorrichtung also die Kennung des Behälters "1", die Kennung des Transportelements des ersten Rundläufers 2 "5" und die Kennung des Transportelements des zweiten Rundläufers 3 "7" aus dem Speicherelement 21b aus.

Mit diesen Informationen kann die Steuervorrichtung 12 unmittelbar bestimmen, dass an dem aufgetretenen Fehler das Transportelement "5" des ersten Rundläufers 2 und das Transportelement "7" des zweiten Rundläufers 3 beteiligt sein können. Diese Information kann einem Bediener der Behälterbehandlungsanlage 1 angezeigt werde, der damit direkt diese Transportelemente auf mögliche Fehlerquellen hin untersuchen kann.

Weiterhin können diese Informationen in eine Fehlerstatistik einfließen. Insbesondere kann nach der Bestimmung, dass ein Fehler aufgetreten ist, ein oder mehrere Zähler erhöht werden. Beispielsweise können Zähler für die Art des Fehlers und die Kennungen der an dem Transport beteiligten Transportelemente erhöht werden. Es ist auch möglich, dass ein Zähler für die Kombination der Fehlerart und der Kennung mindestens einer der an dem Transport beteiligten Transportelemente erhöht wird.

Da für eine bestimmte Transportposition nur die Kennungen der Transportelemente, die bisher am Transport des Behälters beteiligt waren, in dem Speicherelement 21 abgelegt werden, kann vermieden werden, dass im Falle der Bestimmung eines Fehlers fälschlicherweise Transportelemente eines Rundläufers einfließen, den der Behälter noch nicht durchlaufen hat, und daher nicht an der Fehlerentstehung beteiligt sein können.

Es versteht sich, dass in den zuvor beschriebenen Ausführungsbeispielen genannte Merkmale nicht auf diese speziellen Kombinationen beschränkt und auch in beliebigen anderen Kombinationen möglich sind.

## Patentansprüche

1. Behälterbehandlungsanlage (1), umfassend:
einen ersten Rundläufer (2) umfassend eine Vielzahl von Transportelementen (6) zum Transportieren von je einem Behälter entlang einer ersten Förderstrecke;
einen zweiten Rundläufer (3) umfassend eine Vielzahl von Transportelementen (6) zum Transportieren von je einem Behälter entlang einer zweiten Förderstrecke, wobei die zweite Förderstrecke der ersten Förderstrecke nachgeordnet ist;
eine Speichervorrichtung (13); und
eine Steuervorrichtung (12);
wobei die Steuervorrichtung (12) konfiguriert ist, während des Transports eines Behälters durch die Behälterbehandlungsanlage (1):
zu bestimmen, dass ein erstes Transportelement den Behälter in dem ersten Rundläufer (2) transportiert und eine dem ersten Transportelement zugeordnete Kennung in der Speichervorrichtung (13) abzulegen;
zu bestimmen, dass ein zweites Transportelement den Behälter in dem zweiten Rundläufer (3) transportiert und eine dem zweiten Transportelement zugeordnete Kennung in der Speichervorrichtung (13) abzulegen;
festzustellen, ob während des Transports des Behälters durch die Behälterbehandlungsanlage (1) ein Fehler auftritt; und
wenigstens eine abgelegte Kennung aus der Speichervorrichtung (13) abzurufen, falls festgestellt wird, dass während des Transports des Behälters ein Fehler aufgetreten ist.

2. Behälterbehandlungsanlage (1) gemäß Anspruch 1, wobei die Steuervorrichtung (12) konfiguriert ist, die Kennung des ersten Transportelements (6) und des zweiten Transportelements (6) aufgrund einer Stellung eines Antriebs des ersten Rundläufers (2) oder des zweiten Rundläufers (3) zu bestimmen.

3. Behälterbehandlungsanlage (1) gemäß einem der vorhergehenden Ansprüche, wobei die Speichervorrichtung (13) ein Schieberegister (20) umfasst, und wobei die Steuervorrichtung (13) konfiguriert ist, die Kennung des ersten Transportelements und des zweiten Transportelements in dem Schieberegister (20) abzulegen.

4. Behälterbehandlungsanlage (1) gemäß Anspruch 3,
wobei das Schieberegister (20) eine vorbestimmte Anzahl (N) von Speicherelementen (21) aufweist, und
wobei die Anzahl (N) von Speicherelementen (21) einer Anzahl von Transportpositionen entspricht, die der Behälter bei dem Transport durch die Behälterbehandlungsanlage (1) durchläuft, wobei der Behälter jeweils von einer Transportposition zur nächsten durch einen Transportschritt weiterbewegt wird.

5. Behälterbehandlungsanlage (1) gemäß Anspruch 4, wobei die Steuervorrichtung (12) konfiguriert ist,
eine erste Transportposition zu bestimmen, an dem sich der Behälter zu einem ersten Zeitpunkt befindet, insbesondere aufgrund einer Stellung eines Antriebs (14a, 14b) des ersten Rundläufers (2) oder des zweiten Rundläufers (3), und
die Kennung des ersten Transportelements und/oder des zweiten Transportelements in dem Speicherelement (21) abzulegen, das der ersten Transportposition entspricht.

6. Behälterbehandlungsanlage (1) gemäß Anspruch 5, wobei die Steuervorrichtung (12) konfiguriert ist,
zu bestimmen, dass zu einem zweiten Zeitpunkt seit dem ersten Zeitpunkt eine bestimmte Anzahl von Transportschritten erfolgt ist, insbesondere aufgrund einer Stellung eines Antriebs (14a, 14b) des ersten Rundläufers (2) oder des zweiten Rundläufers (3), und
die Kennung des ersten Transportelements und/oder des zweiten Transportelements in dem Speicherelement (21) abzulegen, das der Transportposition entspricht, an der sich der Behälter aufgrund der bestimmte Anzahl von Transportschritten zu dem zweiten Zeitpunkt befindet.

7. Behälterbehandlungsanlage (1) gemäß einem der vorherigen Ansprüche, wobei die Steuervorrichtung (12) konfiguriert ist,
die Kennung des zweiten Transportelements nicht in der Speichervorrichtung (13) abzulegen, solange sich der Behälter auf der ersten Förderstrecke befindet, oder
als Kennung des zweiten Transportelements einen Platzhalter, insbesondere eine Null, in der Speichervorrichtung (13) abzulegen, solange sich der Behälter auf der ersten Förderstrecke befindet.

8. Behälterbehandlungsanlage (1) gemäß einem der vorherigen Ansprüche, wobei die Steuervorrichtung (12) konfiguriert ist, für jeden Rundläufer mindestens einen Zähler für eine Anzahl von Fehlern zu erhöhen, falls festgestellt wird, dass während des Transports des Behälters entlang der Förderstrecke dieses Rundläufers oder eines nachgeordneten Rundläufers ein Fehler aufgetreten ist.

9. Behälterbehandlungsanlage (1) gemäß Anspruch 8, wobei der mindestens eine Zähler einen Zähler für die Art des Fehlers und/oder einen Zähler für den ersten Rundläufer (2) und/oder einen Zähler für einen den ersten Rundläufer (2) nachgeordneten Rundläufer (3, 4, 5) und/oder einen Zähler für die Kennung des ersten Transportelements und/oder einen Zähler für die Kennung des zweiten Transportelements umfasst.

10. Behälterbehandlungsanlage (1) gemäß einem der vorherigen Ansprüche, wobei die Steuervorrichtung (12) konfiguriert ist, für jeden Rundläufer die Kennung mindestens eines Transportelements des jeweiligen Rundläufers mit einer Stellung eines Antriebs des jeweiligen Rundläufers zu verknüpfen.

11. Verfahren zur Steuerung einer Behälterbehandlungsanlage (1), insbesondere gemäß einem der vorhergehenden Ansprüche, umfassend:
Bestimmen, dass ein erstes Transportelement eines ersten Rundläufers (2) der Behälterbehandlungsanlage (1) einen Behälter in dem ersten Rundläufer (2) entlang einer ersten Förderstrecke transportiert und Ablegen einer dem ersten Transportelement zugeordneten Kennung in einer Speichervorrichtung (13) der Behälterbehandlungsanlage;
Bestimmen, dass ein zweites Transportelement eines zweiten Rundläufers (3) der Behälterbehandlungsanlage (1) den Behälter in dem zweiten Rundläufer (3) entlang einer zweiten Förderstrecke transportiert und Ablegen einer dem zweiten Transportelement zugeordneten Kennung in der Speichervorrichtung (13);
Feststellen, ob während des Transports des Behälters durch die Behälterbehandlungsanlage (1) ein Fehler auftritt; und
Abrufen wenigstens einer abgelegten Kennung aus der Speichervorrichtung (13), falls festgestellt wird, dass während des Transports des Behälters ein Fehler aufgetreten ist.

12. Verfahren gemäß Anspruch 11, weiterhin umfassend:
Bestimmen der Kennung des ersten Transportelements und des zweiten Transportelements aufgrund einer Stellung eines Antriebs (14a, 14b) des ersten Rundläufers (2) oder des zweiten Rundläufers (3).

13. Verfahren gemäß einem der Ansprüche 11 oder 12, weiterhin umfassend:
Ablegen der Kennung des ersten Transportelements und des zweiten Transportelements in einem Schieberegister (20) der Speichervorrichtung (13).

14. Verfahren gemäß Anspruch 13, wobei das Schieberegister (20) eine vorbestimmte Anzahl (N) von Speicherelementen (21) aufweist und wobei die Anzahl (N) von Speicherelementen (21) einer Anzahl von Transportpositionen entspricht, die der Behälter bei dem Transport durch die Behälterbehandlungsanlage durchläuft, wobei der Behälter jeweils von einer Transportposition zur nächsten durch einen Transportschritt weiterbewegt wird.

15. Verfahren gemäß Anspruch 14, weiterhin umfassend:
Bestimmen einer ersten Transportposition, an der sich der Behälter zu einem ersten Zeitpunkt befindet, insbesondere aufgrund einer Stellung eines Antriebs (14a, 14b) des ersten Rundläufers (2) oder des zweiten Rundläufers (3), und
Ablegen der Kennung des ersten Transportelements und/oder des zweiten Transportelements in dem Speicherelement (21), das dem ersten Transportschritt entspricht,
insbesondere weiterhin umfassend: Bestimmen, dass zu einem zweiten Zeitpunkt seit dem ersten Zeitpunkt eine bestimmte Anzahl von Transportschritten erfolgt ist, insbesondere aufgrund einer Stellung eines Antriebs (14a, 14b) des ersten Rundläufers (2) oder des zweiten Rundläufers (3), und Ablegen der Kennung des ersten Transportelements und/oder des zweiten Transportelements in dem Speicherelement (21), das der Transportposition entspricht, an der sich der Behälter aufgrund der bestimmten Anzahl von Transportschritten zu dem zweiten Zeitpunkt befindet.

16. Verfahren gemäß einem der Ansprüche 11 bis 15, weiterhin umfassend:
kein Ablegen der Kennung des zweiten Transportelements in der Speichervorrichtung (13), solange sich der Behälter auf der ersten Förderstrecke befindet, oder
Ablegen eines Platzhalters, insbesondere einer Null, als Kennung des zweiten Transportelements in der Speichervorrichtung (3), solange sich der Behälter auf der ersten Förderstrecke befindet.

17. Verfahren gemäß einem der Ansprüche 11 bis 16, weiterhin umfassend:
Erhöhen mindestens eines Zählers für eine Anzahl von Fehlern, falls festgestellt wird, dass während des Transport des Behälters entlang der Förderstrecke dieses Rundläufers oder eines nachgeordneten Rundläufers ein Fehler aufgetreten ist,
insbesondere wobei der mindestens eine Zähler einen Zähler für die Art des Fehlers und/oder einen Zähler für den ersten Rundläufer (2) und/oder einen Zähler für einen den ersten Rundläufer (2) nachgeordneten Rundläufer (3, 4, 5) und/oder einen Zähler für die Kennung des ersten Transportelements und/oder einen Zähler für die Kennung des zweiten Transportelements umfasst.

18. Verfahren gemäß einem der Ansprüche 11 bis 17, weiterhin umfassend:
Verknüpfen, für jeden Rundläufer, der Kennung mindestens eines Transportelements des jeweiligen Rundläufers mit einer Stellung eines Antriebs des jeweiligen Rundläufers.
